(19) Europäisches Patentamt
European Patent Office
Office européen des brevets

(11) Publication number: 0 106 530 B1

(12) EUROPEAN PATENT SPECIFICATION

(45) Date of publication of patent specification: 10.09.86

(51) Int. Cl.$^4$: C 08 F 212/14, C 09 K 7/06

(21) Application number: 83305339.0

(22) Date of filing: 13.09.83

# (54) Drilling fluids based on powdered sulfonated thermoplastic polymers.

(30) Priority: 13.09.82 US 416945

(43) Date of publication of application: 25.04.84 Bulletin 84/17

(45) Publication of the grant of the patent: 10.09.86 Bulletin 86/37

(84) Designated Contracting States: BE DE FR GB

(56) References cited:
EP-A-0 072 245
US-A-2 650 905
US-A-3 023 760
US-A-3 067 161
US-A-3 826 771

(73) Proprietor: Exxon Research and Engineering Company
P.O.Box 390 180 Park Avenue
Florham Park New Jersey 07932 (US)

(72) Inventor: Lundberg, Robert Dean
4 Brian Drive
Bridgewater New Jersey 08807 (US)
Inventor: Peiffer, Dennis George
10 Churchill Road
East Brunswick New Jersey 08816 (US)
Inventor: Turner, Sam Richard
132 Surrey Hill Way
Rochester New York 14623 (US)
Inventor: Walker, Thad Oscar
1311 St. Andrew's
Humble Texas 77339 (US)

(74) Representative: Field, Roger Norton et al
ESSO Engineering (Europe) Ltd. Patents & Licences Apex Tower High Street
New Malden Surrey KT3 4DJ (GB)

EP 0 106 530 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention involves viscosification agents for oil-based drilling muds. These drilling muds are used during the operation of gas and oil wells as fluids for maintaining pressure, cooling drill bits and lifting cuttings from the holes in the drilling operation wherein these viscosification agents are powdered free-flowing non-agglomerating neutralised sulphonate-containing styrene polymers having a particle size range of 0.25 to 2.5 µm. The oil-based drilling muds of the present invention minimally comprise, (but can also include other additives); an organic liquid such as an oil, water (fresh water or salt water) (1 to 10 parts by weight per 100 parts by weight of the organic liquid), an emulsifier, (20 to 50 lb/bbl — 0.057 to 0.143 kg/l) a wetting agent, a weighting material and a latex of a neutralised sulphonate-containing styrene polymer (0.25 to 4 lb/bbl — 0.0007 to 0.011 kg/l). In general, the oil-based drilling mud has a specific gravity of 7 pounds per gallon to 20 pounds per gallon (0.7 to 2 kg/l), more preferably 10 to 16 lb/gallan (1 to 1.6 kg/l) and most preferably 12 to 16 lb/gallon (1.2 to 1.6 kg/l). A typical oil-based drilling mud, as envisaged by the present invention, comprises: an oil; 1 to 10 parts by weight of water per 100 parts by weight of the oil, more preferably 3 to 5 parts by weight/100 parts by weight; and 20 to 50 lb/bbl (0.057 to 0.143 kg/l) of an emulsifier with or without a supplementary emulsifier; ½ to 5 lb/bbl (0.0014 to 0.0143 kg/l) of a wetting agent; and weighting material (barium sulphate or barite) necessary to give the desired mud density; which comprises less than 800 lb/bbl (2.284 kg/l) of barium sulphate, more preferably 5 to 750 lb/bbl (0.014 to 2.14 kg/l) and most preferably 10 to 700 lb/bbl (0.029 to 2.0 kg/l); and 0.25 to 4 lb/bbl (0.0007 to 0.011 kg/l) of a powdered neutralised sulphonate-containing styrene polymer.

The organic liquid employed in the oil-based drilling mud includes oils, for excample, a No. 2 diesel fuel, but it can be other commercially available hydrocarbon solvents such as kerosene, fuel oils, or selected crude. If crudes are used, they should be weathered and must be free of emulsion breakers.

Typical, but non-limiting examples of suitable emulsifiers which can be readily employed are magnesium or calcium soaps of fatty acids.

Typical, but non-limiting examples of a suitable wetting agent which can be readily employed is an alkaryl sulfonate.

Typical, but non-limiting examples of a weighting material which can be readily employed is baritee or a barium sulfate, which may optionally be surface-treated with other cations such as calcium.

The powdered neutralized sulfonate-containing polymers may be formed by a free radical copolymerization process. The monomer used in the free radical emulsion copolymerization process is styrene monomer, which is copolymerized with sulfonate-containing styrene monomer.

In general, the styrene and sulfonate-containing styrene monomer are dispersed in a water phase in the presence of a free radical initiator and a suitable surfactant, wherein the temperature is sufficient to initiate polymerization. The resultant latex is injected into a Buchi Laboratory Spray Dryer.

The resultant powdered sulfonated thermoplastic formed by this spray drying process has a particle size range of 0.1 to 10 µm, more preferably 0.15 to 5 µm, and most preferably 0.25 to 2.5 µm. To the drilling mud formulation is added 0.25 to 4 lb/bbl (0.0007 to 0.011 kg/l) of the powdered sulfonated thermoplastic polymer.

The sulfonate-containing polymers formed from the free radical emulsion copolymerization and spray drying process can be generally described as having an $\overline{M}_n$ of 5,000 to 200,000, more preferably 10,000 to 100,000. The sulfonate-containing polymers of the present invention contain 5 to 100 meq, preferably 18 to 100 meq, more preferably 18 to 90 meq, and most preferably 20 to 80 meq of sulfonate groups per 100 grams of polymer. The preferred sulfonate-containing polymer which is formed by the free radical emulsion copolymerization and spray drying process is styrene/sodium styrene sulfonate copolymer, which can optionally have up to 3 wt.% sodium styrene sulfonate monomer therein.

The sulfonate-containing monomer which is water soluble, can be generally described as a monomer having unsaturation and a metal or amine sulfonate group. The metal or amine neutralized sulfonate monomer may be characterized by the formula:

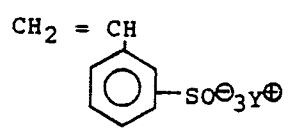

wherein $Y^{\oplus}$ is a cation selected from Groups IA, IIA, IB and IIB of the Periodic Table or an amine of the formula:

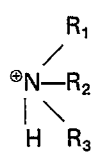

where $R_1$, $R_2$ and $R_3$ are aliphatic groups of $C_1$ to $C_{12}$ or hydrogen. Particularly suitable metal cations are

sodium, potassium and zinc, and an especially prefered metal cation is sodium. A typical, but non-limiting example of suitable sulfonate-containing monomer is:

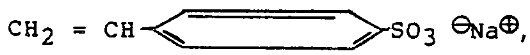

Sodium styrene sulfonate

An especially preferred sulfonate-containing monomer is a metal styrene sulfonate. The molar ratio of sulfonate-containing monomer to styrene monomer is 1/200 to 1/5, more preferably 1/150 to 1/6 and most preferably 1/100 to 1/9.

The redox emulsion polymerization recipe used for making the polymers is effective in initiating the copolymerization of water insoluble and water soluble comonomers in an emulsion system.

In general, the styrene and sulfonate-containing comonomer are dispersed in a water phase in the presence of a water soluble initiator or a redox system whcih is water soluble or has one component soluble in the oil phase and one component soluble in the water phase, and either with or without surfactant, wherein the temperature is sufficient to initiate polymerization.

The surfactants employed in making the polymers are varied and well-known in the art. The typical emulsifiers or surfactants can be employed; however, some are more effective than others in generating latices of better stability. A preferred emulsifier is sodium lauryl sulfate.

The buffering agents, if used, in the polymerization process are selected from sodium carbonate, ammonia, sodium acetate, trisodium phosphate, etc. These buffering agents are employed at a concentration of 0.1 to 5 grams per 100 grams water employed in the emulsion system.

Chain transfer agents can be readily employed in the polymerization process for controlling the molecular weight of the resultant copolymer. The concentraiton of chain transfer agent is from 0 to 1.0 grams per 100 grams of the combined weight of the sulfonate-containing monomer and the conjugated diene.

The free radical emulsion copolymerization of the water soluble sulfonate-containing polymer and the styrene monomer yields a stable latex, wherein the resultant water insoluble sulfonate-containing copolymer is not covalently cross-linked and possesses substantial ionic cross-linking, and has 5 to 100 meq, preferably 18 to 100 meq, more preferably 18 to 90 meq of sulfonate groups per 100 grams of polymer.

Example 1

The powdered sulfonated thermoplastics which were used in the drilling mud formulations were prepared by emulsion techniques that allow incorporation of sodium sulfonate styrene monomer into styrene to form the sulfonate-containing copolymer. A glass pressure bottle was charged with 50 ml of deaerated water, 25.0 g of styrene, 1.0 g of NaSS, 1.6 g of sodium lauryl sulfate, 0.1 g of potassium persulfate and 0.1 g of dodecyl thiol as a chain transfer agent to control molecular weight. The bottle was flushed with nitrogen, capped and then was shaken at 50°C in a thermostatted water bath for six hours. The resulting stable emulsion was short stopped with hydroquinone and cooled to room temperature. This emulsion was sprayed dried into a powder which was used in the drilling fluid formulation. This represents polymer B in Table I.

Example 2

Styrene and sodium styrene sulphonate were copolymerised in an identical fashion to Example I. Note: The resulting emulsion was coagulated by addition to excess methanol and sodium chloride. The resulting solid polymer was isolated by filtration and dried under vacuum. This copolymer is Polymer A in Table I.

Example 3

The mud formulation was prepared by mixing 205.82 g of No. 2 diesel oil, 34.7 g Oil Faze (Magcobar), 1.5 g SE11 and 1.5 g DV33 (Magcobar). (Oil-Faze is a blend of asphalts, surfactants and organic soaps; SE11 is a liquid blend of emulsifier and wetting agent; and DV-33 is a liquid organic surfactant). To this mixture, 10.0 g of $CaCl_2$ in 21 ml of $H_2O$ was added. Four batches of this mud formulation were prepared and Polymer A was added at treat levels of $\frac{1}{2}$ lb/bbl (0.0014 kg/l) and Polymer B to the other at the same treat rate. The results are displayed in Table I. Note the superior 600 rpm and 300 rpm viscosities, the improved yield points and 10 min. gel strength of Polymer B, the spray-dried polymer from Example I.

TABLE I

SPS(1) Coagulated Polymer vs. SPS Spray Dried Polymer Performance in Oil-Based Drilling Mud

| | | Polymer A(2) | | Polymer B(3) | |
|---|---|---|---|---|---|
| | | ½ lb/bbl. (0.0014 kg/l) | 1 lb/bbl. (0.0029 kg/l) | ½ lb/bbl. (0.0014 kg/l) | 1 lb/bbl. (0.0029 kg/l) |
| | 600 | 34 | 35 | 39 | 40 |
| | 300 | 17 | 17 | 21 | 21 |
| 150°F | PV | 17 | 18 | 18 | 19 |
| (65.6°C) | YP | 0 | 0 | 3 | 2 |
| | 0 gel | 2 | 3 | 2 | 2 |
| | 10 gel | 2 | 3 | 4 | 4 |
| | 600 | 35 | 37 | 43 | 47 |
| | 300 | 17 | 18 | 23 | 25 |
| | PV | 18 | 19 | 20 | 22 |
| 300°F | YP | 0 | 0 | 3 | 3 |
| (149°C) | 0 gel | 2 | 2 | 2 | 2 |
| | 10 gel | 3 | 3 | 10 | 9 |
| | 600 | 40 | 43 | 42 | 47 |
| | 300 | 21 | 23 | 22 | 25 |
| | PV | 19 | 20 | 20 | 22 |
| 400°F | YP | 2 | 3 | 2 | 3 |
| (204°C) | 0 gel | 1 | 3 | 2 | 3 |
| | 10 | 4 | 9 | 11 | 12 |

(1) 1.99 mol.% NaSS.
(2) Coagulated polymer.
(3) Spray dried polymer.

**Claims**

1. A powdered copolymer of styrene and a metal styrene sulfonate having a particle size of about 0.1 to 10.0 μm, wherein said copolymer has about 5 to 100 meq of sulfonate groups per 100 grams of said copolymer.

2. A powdered copolymer according to claim 1, wherein the sulfonate groups of said copolymers are neutralised with a counter-ion selected from antimony, iron, aluminum, lead and Groups IA, IIA, IB and IIB of the Periodic Table of Elements.

3. A powdered copolymer according to claim 1 wherein said metal styrene sulfonate is sodium styrene sulfate

4. A drilling mud which comprises:

(a) an organic liquid substantially imiscible in water;

(b) 1 to 10 parts by weight of water per 100 parts by weight of the organic liquid;

(c) 20 to 50 lb/bbl (0.057 to 0.143 kg/l) of the drilling mud of at least one emulsifier;
(d) a wetting agent;
(e) weighting material necessary to achieve the desired density; and
(f) 0.25 to 4 lb/bbl (0.0007 to 0.011 kg/l) of the drilling mud of a powdered neutralised sulfonate-containing styrene polymer having a particle size range of 0.1 to 10.0 μm, said neutralised sulfonated polymer having 5 to 100 meq of sulfonate gropus per 100 grams of the neutralised sulfonate-containing styrene polymer.

5. A drilling mud according to claim 4 wherein the powdered neutralised polymer (e) is the polymer according to any one of claims 1 to 3.

6. A drilling mud according to claim 4 wherein the sulphonate groups of said neutralised sulphonate-containing styrene polymer are neutralised with sodium counterions.

7. A drilling mud according to any one of claims 4, 5 and 6 wherein said weighting material is barite or barium sulphate.

8. A drilling mud according to any one of claims 4 to 7 wherein the concentration level of said weighting material is sufficient to give said drilling mud a specific gravity of about 7 to about 20 lb/gal (0.7 to 2 kg/l).

9. A drilling mud according to any one of claims 4 to 8 wherein said organic liquid is an oil.

10. A drilling mud according to any one of claims 4 to 9 which further includes a polar cosolvent.

**Patentansprüche**

1. Pulveriges Copolymner aus Styrol und einem Metallstyrolsulfonat mit einer Teilchengröße von etwa, 0,1 bis 10,0 μm wobei das Copolymer etwa 5 bis 100 Milliäquivalente sulfonatgruppe je 100 g des Copolymeren enthält.

2. Pulveriges Copolymer nach Anspruch 1, dadurch gekennzeichnet, daß die Sulfonatgruppen des Copolymeren mit einem Gegenion ausgewählt aus Antimon, Eisen, Aluminium, Blei und den Gruppen IA, IIA, IB und IIB des periodischen Systems der Elemente neutralisiert sind.

3. Pulveriges Copolymer nach Anspruch 1, dadurch gekennzeichnet, daß das Metallstyrolsulfonat Natriumstyrolsulfonat ist.

4. Bohrschlamm, gekennzeichnet durch:
(a) eine organische Flüssigkeit, die im wesentlichen mit Wasser nicht mischbar ist;
(b) 1 bis 10 Gew.-Teile Wasser je 100 Gew.-Teile der organischen Flüssigkeit;
(c) 0,057 bis 0,143 kg mindestens eines Emulgiermittels je 1 Bohrschlamm,
(d) ein Benetzungsmittel;
(e) ein Beschwerungsmaterial, das für die Erzielung der gewünschten Dichte erforderlich ist; und
(f) 0,0007 bis 0,011 kg je 1 Bohrschlamm eines pulverigen neutralisierten sulfonathaltigen Styrolpolymeren mit einem Teilchengrößebereich von 0,1 bis 10,0 μm, wobei das neutralisierte sulfonierte Polymer 5 bis 100 Milliäquivalente Sulfonatgruppen je 100 g des neutralisierten sulfonathaltigen Styrolpolymeren besitzt.

5. Bohrschlamm nach Anspruch 4, dadurch gekennzeichnet, daß das gepulverte neutralisierte Polymer (e) das Copolymer gemäß einem der Ansprüche 1 bis 3 ist.

6. Bohrschlamm nach Ansprüche 4, dadurch gekennzeichnet, daß Sulfonatgruppen des neutralisierten sulfonathaltigen Styrolpolymeren mit Natriumgegenionen neutralisiert sind.

7. Bohrschlamm nach einem der Ansprüche 4, 5 und 6, dadurch gekennzeichnet, daß das Beschwerungsmaterial Baryt oder Bariumsulfat ist.

8. Bohrschlamm nach einem der Ansprüche 4 bis 7, dadurch gekennzeichnet, daß das Konzentrationsniveau des Beschwerungsmaterials ausreicht, dem Bohrschlamm ein spezifisches Gewicht von etwa 0,7 bis 2 kg/l zu verleihen.

9. Bohrschlamm nach einem der Ansprüche 4 bis 8, dadurch gekennzeichnet, daß die organische Flüssigkeit ein Öl ist.

10. Bohrschlamm nach einem der Ansprüche 4 bis 9, dadurch gekennzeichnet, daß er außerdem ein polares Colösungsmittel enthält.

**Revendications**

1. Un copolymère de styrène et d'une styrène sulfonate métallique en poudre avec une granulométrie d'environ 0,1 à 10,0 μm, dans lequel ledit copolymère possède environ 5 à 100 méq de groupes sulfonate pour 100 g dudit copolymère.

2. Copolymère en poudre selon la revendication 1, dans lequel les groupes sulfonate dudit copolymère sont neutralisés avec un contre-ion choisi parmi l'antimoine, le fer, l'aluminium, le plomb et les groupes IA, IIA, IB et IIB de la Classification Périodique des Eléments.

3. Copolymère en poudre selon la revendication 1, dans lequel ledit styrène sulfonate métallique est le styrène sulfonate de sodium.

4. Une boue de forage qui contient:
a) un liquide organique sensiblement non miscible à l'eau;

b) 1 à 10 parties en poids d'eau pour 100 parties en poids du liquide organique;

c) 0,057 à 0,143 kg 20 à 40 lb/bbl d'au moins un émulsifiant par litre de boue de forage;

d) un agent mouillant;

e) une matière dense nécessaire à l'obtention de la densité requise, et

f) 0,0007 à 0,11 kg 0,25 à 4 lb/bbl d'un polymère de styrène sulfoné neutralisé en poudre avec une granulométrie de 0,1 à 10,0 µm par litre de boue de forage, ledit polymère sulfoné neutralisé possédant 5 à 100 méq de groupes sulfonate pour 100 g du polymère de styrène sulfoné neutralisé.

5. Une boue de forage selon la revendication 4, dans laquelle le polymère neutralisé en poudre (e) est le copolymère selon l'une quelconque des revendications 1 à 3.

6. Boue de forage selon la revendication 4, dans laquelle les groupes sulfonate dudit polymère de styrène sulfoné neutralisé sont neutralisés avec des contre-ions sodium.

7. Boue de forage selon l'une quelconque des revendications 4, 5 et 6, dans laquelle la matière sense est la barytine ou le sulfate de baryum.

8. Boue de forage selon l'une quelconque des revendications 4 à 7, dans laquelle la concentration de la matière sense est suffisante pour l'obtention d'une masse volumique de ladite boue de forage d'environ 0,7 à 2 kg/l.

9. Boue de forage selon l'une quelconque des revendications 4 à 8, dans laquelle le liquide organique est une huile.

10. Boue de forage selon l'une quelconque des revendications 4 à 9 comportant en outre un cosolvant polaire.